# EUROPÄISCHE PATENTANMELDUNG

(11) **EP 3 261 249 A1**
(43) Veröffentlichungstag der Anmeldung: **27.12.2017**
(21) Anmeldenummer: 16175400.7
(22) Anmeldetag: 21.06.2016
(51) Int. Cl.: H02S 20/23, F24J 2/52

(54) **BEFESTIGUNGSVORRICHTUNG FÜR PHOTOVOLTAIKMODULE UND FREIFLÄCHENANLAGEN**

(71) Anmelder: Zimmermann PV-Stahlbau GmbH & Co. KG, 88436 Oberessendorf (DE)
(72) Erfinder: Zimmermann, Robert, 88436 Eberhardzell (DE)
(74) Vertreter: Otten, Roth, Dobler & Partner mbB Patentanwälte

(57) **Zusammenfassung**

Vorgeschlagen wird eine kostengünstige Befestigungsvorrichtung (1) für Photovoltaikmodule (2) für Freiflächenanlagen (10), umfassend einen Behälter (3) mit einem Aufnahmeraum (4) für Füllmaterial, insbesondere Sand, Steine, Kies oder dergleichen zum Beschweren der Befestigungsvorrichtung (1).

## Beschreibung

Die Erfindung betrifft eine Befestigungsvorrichtung für Photovoltaikmodule für Freiflächenanlagen sowie eine Freiflächenanlage nach dem Oberbegriff des Anspruchs 9. Darüber hinaus betrifft die Erfindung ein Verfahren zur Installation von Photovoltaikmodulen nach dem Oberbegriff des Anspruchs 12.

Aus dem Stand der Technik ist bekannt, Freiflächenanlagen, etwa in Form von Solarparks zu errichten, in denen die dafür vorgesehenen Photovoltaikmodule auf eigens dafür vorgesehenen Stahlgestellen installiert werden. Diese Stahlgestelle werden im Boden verankert bzw. oftmals zumindest teilweise einbetoniert, damit ein fester Halt gewährleistet ist, zumal die flächig errichteten Photovoltaikmodule auch starkem Wind standhalten müssen.

Aufgabe der Erfindung ist es, eine Befestigungsvorrichtung für Photovoltaikmodule für Freiflächenanlagen bereitstellen zu können, welche kostengünstiger realisiert werden kann.

Die Aufgabe wird, ausgehend von einer Befestigungsvorrichtung bzw. einer Freiflächenanlage sowie einem Installationsverfahren der Photovoltaikmodule der eingangs genannten Art, durch die Merkmale des Anspruchs 1 bzw. die kennzeichnenden Merkmale der Ansprüche 9 und 12 gelöst.

Durch die in den abhängigen Ansprüchen genannten Maßnahmen sind vorteilhafte Ausführungen und Weiterbildungen der Erfindungen möglich.

Dementsprechend umfasst die erfindungsgemäße Befestigungsvorrichtung für Photovoltaikmodule für Freiflächenanlagen einen Behälter mit einem Aufnahmeraum für Füllmaterial. Dieser Behälter kann durch die Befüllung mit Füllmaterial beschwert werden, sodass ein fester Halt am Boden möglich wird, ohne dass eine Verankerung oder eine Einbetonieren der Befestigungsvorrichtung notwendig wäre. Mit diesem Schritt wird zunächst die Montage wesentlich vereinfacht, da die entsprechenden Befestigungsvorrichtungen lediglich auf den Boden abgestellt werden müssen und danach entsprechend zu befüllen sind. Insbesondere werden keine Sondermaschinen gebraucht, um Montagelöcher in den Boden zu bohren, um Gestellteile in den Boden zu rammen oder um Aushebearbeiten vorzunehmen, damit später Gestellteile in den Boden einbetoniert werden können. Dies bringt den Vorteil mit sich, dass nicht nur die Montage vereinfacht wird, sondern auch eine kostengünstigere Installation ermöglicht wird.

Darüber hinaus kann aber auch ein großer Zeitvorteil erreicht werden, weil das Aufstellen der Freiflächenanlagen aufgrund der vereinfachten Montage wesentlich schneller vonstattengehen kann. Darüber hinaus können die für die Installationen notwendigen Teile, also zum einen die Befestigungsvorrichtungen selbst mit ihren Behältern sowie den Gestellteilen, Verbindern und Schienen, platzsparend transportiert werden, was ebenfalls einen Kosten- und Zeitvorteil mit sich bringt. Das entsprechende Füllmaterial, bei dem es sich bspw. um Sand, Steine, Kies oder dergleichen handeln kann, muss ebenfalls nicht über längere Strecken transportiert werden, sondern kann bei einer Fernmontage auch vor Ort eingekauft und zum Beschweren verwendet werden.

Darüber hinaus zeichnet sich die erfindungsgemäße Befestigungsvorrichtung dadurch aus, dass eine einmal installierte Freiflächenanlage entsprechend auch wieder einfach, schnell und auch kostengünstig demontiert und ggf. an einer anderen Stelle wieder aufgebaut werden kann. Außerdem wird der Boden, auf dem die Freiflächenanlage bzw. der Solarpark aufgestellt wird, im Wesentlichen in seinem ursprünglichen Zustand belassen, d.h. es müssen z. B. keine Verankerungen, insbesondere keine in den Boden einbetonierte Haltevorrichtungen wieder ausgegraben werden. Auch müssen entsprechende Löcher im Boden nicht wieder neu gefüllt werden, sondern nach der Demontage und dem Abtransport kann die Fläche praktisch unmittelbar für einen anderen Zweck genutzt werden.

In einfacher Weise kann der Behälter dazu eine Einfüllöffnung, insbesondere an seiner Oberseite umfassen, sodass der Behälter aufgestellt und von oben befüllt wird bis das Füllmaterial und die somit erreichte Beschwerung ausreicht, dass die Freiflächenanlagen bzw. das Photovoltaikmodul später einen festen Stand auf dem Boden hat insbesondere auch bei ungünstigen Witterungsverhältnissen und Starkwind.

Um einen besonders platzsparenden Transport zu ermöglichen, ist/sind die Befestigungsvorrichtung und/oder der Behälter bei einer Weiterbildung der Erfindung stapelbar ausgebildet. Die Stapelbarkeit wird dadurch erreicht, dass die Formgebung so gewählt ist, dass mehrere Behälter bzw. Befestigungsvorrichtungen ineinander gestellt werden können. Der Behälter kann bei einer Ausführungsvariante der Erfindung als separater Bestandteil ausgebildet sein, der später bei einer Montage zusammen mit einem Gestell montiert wird und somit schließlich die Befestigungsvorrichtung ergibt. Es ist aber auch denkbar, dass der Behälter kein separates Bauteil darstellt und entweder fest in ein Gestell integriert ist, oder die Befestigungsvorrichtung insgesamt lediglich aus dem Behälter besteht. Durch die Möglichkeit der Stapelung des Behälter oder der Befestigungsvorrichtung können, je nach Ausführungsform, diese platzsparend auf einem LKW oder in einem Container untergebracht werden. In der Regel ist zu erwarten, dass eine entsprechende Freiflächenanlage bzw. ein Solarpark eine solche Größe aufweist, dass eine große Zahl an Befestigungsvorrichtungen notwendig ist und durch Stapelbarkeit ein besonders großer Vorteil beim Transport ermöglicht wird. Insgesamt können auch hierdurch Transportkosten eingespart werden.

Bei weiteren Ausführungsformen der Erfindung können die Wände des Behälter aus einem Gitter und/oder einem Geweben gefertigt sein, insbesondere aus einem Metall, vorzugsweise Edelstahl, weil das Material grundsätzlich allen nur denkbaren Witterungsverhältnissen ausgesetzt sein kann und chemisch entsprechend inert sein sollte. Durch die Ausführung als Gitter oder Gewebe, denkbar ist außerdem eine Ausführung als Lockblech oder dergleichen, kann zunächst Material eingespart werden. Folglich können auch durch diese Maßnahme Kosten reduziert werden. Darüber hinaus kann der Behälter auf diese Weise auch leichter ausgebildet sein, ohne in Bezug auf seine Funktionalität jedoch Einbußen zu erleiden.

Grundsätzlich dient der Behälter zwar zum Beschweren; es ist aber auch zu berücksichtigen, dass der Behälter selbst ggf. über weite Strecken transportiert werden muss, sodass ein geringeres Gewicht sich entsprechend vorteilhaft auswirkt. Für die eigentliche Beschwerung sorgt das spätere Füllmaterial, das meist vor Ort, d.h. dort, wo die Freiflächenanlage aufgebaut werden soll, besorgt werden kann. Der Behälter muss somit im Wesentlichen eine ausreichende Stabilität aufweisen, nicht jedoch selbst ein großes Eigengewicht mit sich bringen.

Neben dem Behälter kann bei einer Ausführungsform der Erfindung auch ein Gestell vorgesehen sein, in dem wenigstens ein Photovoltaikmodul befestigbar ist. Darüber hinaus kann das Gestell zur Verstärkung und Erhöhung der Stabilität des Behälters dient. Dieses Gestell kann grundsätzlich bereits beim Transport mit dem Behälter verbunden sein. In der Regel ist es jedoch vorteilhaft, die einzelnen Gestellteile separat transportieren zu können und Sie erst bei der Montage aufzubauen und mit dem Behälter zu verbinden. Das Gestell kann insbesondere für eine erhöhte Stabilität sorgen. Ein Gestell als Rahmenkonstruktion vorsehen zu können, bringt ebenfalls folgende Vorteile mit sich:
- ein geringeres Gewichts der eigentlichen Befestigungsvorrichtung (ohne Füllmaterial) im Vergleich zu einer Konstruktion aus Vollmaterial mit geschlossenen Wänden, sowie
- Materialeinsparungen und damit verbundene Kostenersparnis.

Um die Photovoltaikmodule mit einer entsprechenden Neigung installieren zu können, kann das Gestell in vorteilhafter Weise eine Pultform beschreiben. In Draufsicht kann es einen rechteckigen Querschnitt aufweisen, wobei in einer Seitenansicht jedoch zwei benachbarte Ecken höher liegen als die anderen beiden, sodass das Photovoltaikmodul mit entsprechender Neigung abgelegt werden kann.

Der Behälter kann entsprechend in dem Gestell angeordnet sein bzw. das Gestell bildet den Grundrahmen für den Behälter. Im befüllten Zustand des Behälters kann also der Schwerpunkt der Befestigungsvorrichtung auch geometrisch in oder nahe an der Mitte der Befestigungsvorrichtung liegen. Darüber hinaus kann die gesamte Grundfläche der Befestigungsvorrichtung für eine Beschwerung benutzt werden, sodass prinzipiell die maximal mögliche Menge an Füllmaterial eingefüllt werden kann, um einen möglichst stabilen Stand zu ermöglichen. Insgesamt erhält dadurch die Befestigungsvorrichtung auch eine kompakte Bauform, die vergleichsweise platzsparend ist, weil der Behälter und den notwendigen Aufnahmeraum für das Füllmaterial lediglich den ohnehin benötigten Platz zwischen den Stelzen des Montagegestells einnimmt.

In vorteilhafter Weise können sodann bei einer Ausführungsvariante der Erfindung die Photovoltaikmodule an einer oder mehreren Montageschienen befestigt werden. Diese Montageschienen, z. B. C-Schienen (Schienen mit C-förmigem Profil), können, wenn das Gestell in vertikaler Richtung 4 Pfosten aufweist, an jeweils 2 Pfosten angeordnet sein, sodass zwischen die sich ergebenden beiden Schienen das Photovoltaikmodul aufgelegt wird und dort befestigt wird. Nach Ausbildung einer Pultform kann z. B. eine der beiden Schienen an den beiden höheren Stützen des Gestells angebracht sein, während die anderen beiden niedrigeren Stützen die zweite Montageschiene tragen. Das entsprechend angeordnete PV-(Photovoltaik-) Modul wird sodann mit einer Neigung angebracht.

Dementsprechend zeichnet sich eine erfindungsgemäße Freiflächenanlage dadurch aus, dass eine erfindungsgemäße Befestigungsvorrichtung bzw. eine Befestigungsvorrichtung nach einem der Ausführungsbeispiele der Erfindung vorgesehen ist und dort wenigstens ein Photovoltaikmodul angebracht ist. Für die entsprechenden Freiflächenanlagen können die bereits vorgenannten und im Zusammenhang mit der Befestigungsvorrichtung erläuterten Vorteile genutzt werden.

Bei einer bevorzugten Weiterbildung der Erfindung kann eine entsprechende Freiflächenanlage so ausgebildet sein, dass wenigsten zwei Befestigungsvorrichtungen vorgesehen sind und diese über wenigstens eine Montageschiene miteinander verbunden werden. Aus dieser Montageschiene oder diesen Montageschienen können sodann Photovoltaikmodule angebracht werden. Es ist also nicht unbedingt notwendig, ein separates Photovoltaikmodul mit einer Befestigungsvorrichtung zu beschweren, sondern in einer Reihe von Photovoltaikmodulen können, je nach Länge, in bestimmten Abständen Befestigungsmodule vorgesehen sein, insbesondere an den Enden der jeweiligen Modulreihen, ggf. auch je nach Länge zwischen drin. Durch die gemeinsame Verbindung hält die gesamte Vorrichtung ihre Stabilität und es kann Material für Befestigungsvorrichtungen eingespart werden, da diese gleichmäßig nur an bestimmten Punkten einzusetzen sind und untereinander mechanisch gekoppelt werden.

Darüber hinaus besteht bei einer Ausführungsform der Erfindung die Möglichkeit, dass keine vollständigen Montageschienen die Strecke zwischen zwei benachbarten Befestigungsvorrichtungen vollständig überbrücken, sondern zusätzliche Stabilität wird dadurch erreicht, dass die PV-Module jeweils einen separaten Montagerahmen aufweisen. Diese Montagerahmen zwischen einzelnen PV-Modulen untereinander verbindbar sind und nur die PV-Module, die sich im Bereich der Befestigungsvorrichtung befinden, mit diesen verbunden werden. Dieser Aufbau ermöglicht in der Regel eine schnellere Montage und kann sich auch beim Transport vorteilhaft auswirken, da keine entsprechend langen Schienen benötigt werden.

Dementsprechend zeichnet sich das erfindungsgemäße Verfahren zu Installation von Photovoltaikmodulen in einer Freiflächenanlage dadurch aus, dass ein Photovoltaikmodul auf einer erfindungsgemäßen Freiflächenanlage bzw. ein Ausführungsbeispiel der Erfindung platziert und der Behälter mit Füllmaterial befüllt wird. Auch hiermit können die bereits vorgenannten Vorteile erreicht werden.

### Ausführungsbeispiel:

Ein Ausführungsbeispiel der Erfindung ist in den Zeichnungen dargestellten und wird nachstehender mit der Angabe weiterer Einzelheiten und Vorteile näher erläutert. Im einzelnen Zeigen:
- Figur 1: eine schematische Seitenansicht einer Befestigungsvorrichtung gemäß der Erfindung mit aufmontiertem Photovoltaikmodul,
- Figur 2: eine schematische Darstellung einer Freiflächenanlage gemäß der Erfindung, sowie
- Figur 3: eine schematische Darstellung einer mehrzeiligen Freiflächenanlage gemäß der Erfindung.

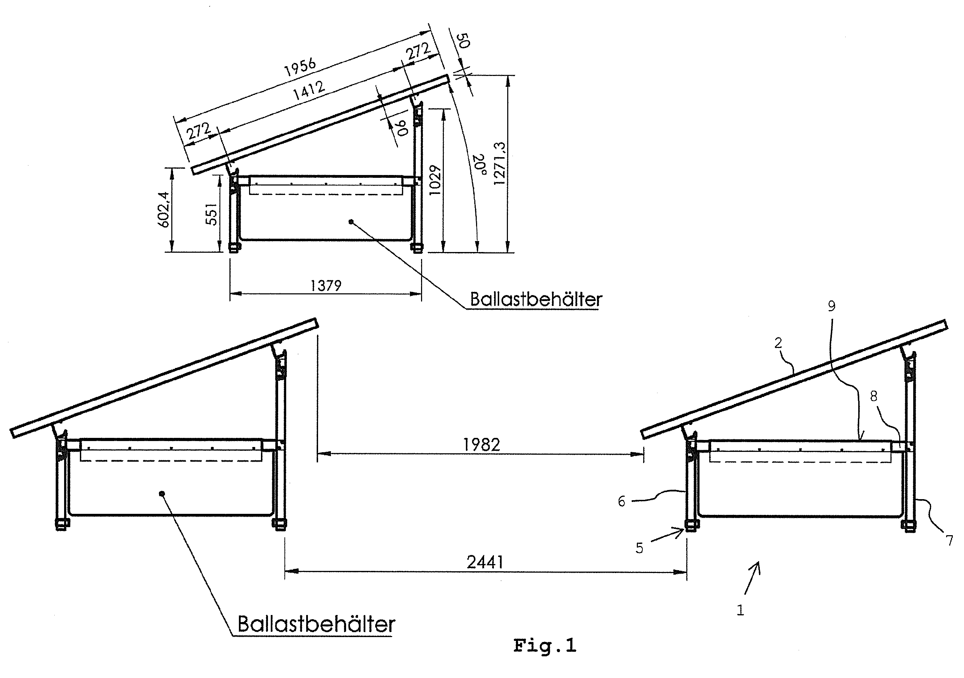

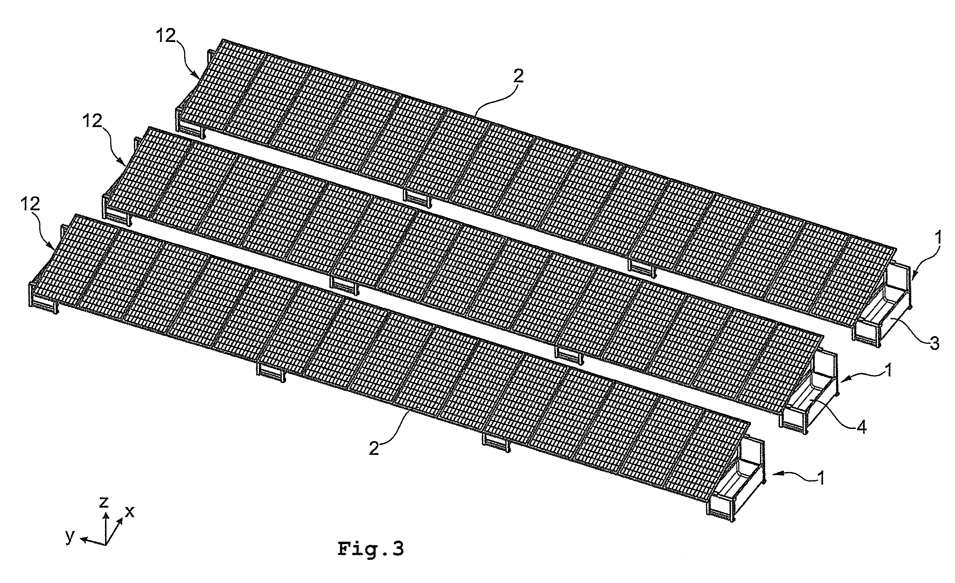

Figur 1 zeigt eine Befestigungsvorrichtung 1 für Photovoltaikmodule 2 mit einem Behälter 3. Der Behälter 3 wiederum umfasst in seinem Inneren einen Aufnahmeraum 4 (vgl. Fig. 3), in welchen Füllmaterial wie Steine, Sand, Kies oder dergleichen eingefüllt werden kann. Das Befestigungsmodul 1 umfasst dazu neben dem Behälter 3 auch ein Gestell 5, das wiederum vier Stützen aufweist, wobei die beiden Stützen 6 kürzer ausgebildet sind als die beiden Stützen 7. Die kurzen Stützen 6 und die langen Stützen 7 bilden in Draufsicht die Ecken einen Rechtecks. Die Stützen 6, 7 sind untereinander durch Querstreben 8 verbunden, in welche der Behälter 3 eingehängt wird bzw. mit denen der Behälter 3 befestigt wird. Der Behälter 3 besteht im vorliegenden Fall aus einer Gitterbox. Diese besitzt oberhalb des Aufnahmeraums 4 eine Füllöffnung 9.

Die einzelnen Stützen 6, 7 und die Querstreben 8 können jeweils als Einzelteile transportiert werden. Ebenfalls transportiert wird der Behälter 3, wobei dieser Behälter stapelbar ausgebildet ist, sodass ein Transport in möglichst kompakter Form realisiert werden kann, ohne dass ein allzu großer Transportraum benötigt wird. Dadurch, dass die Stützen 6 kürzer ausgebildet sind als die Stützten 7, ergibt sich eine Pultform, wobei das Photovoltaikmodul 2 über C-Schienen befestigbar ist, die jeweils an den Stützen 6 bzw. an den Stützten 7 separat befestigt werden können.

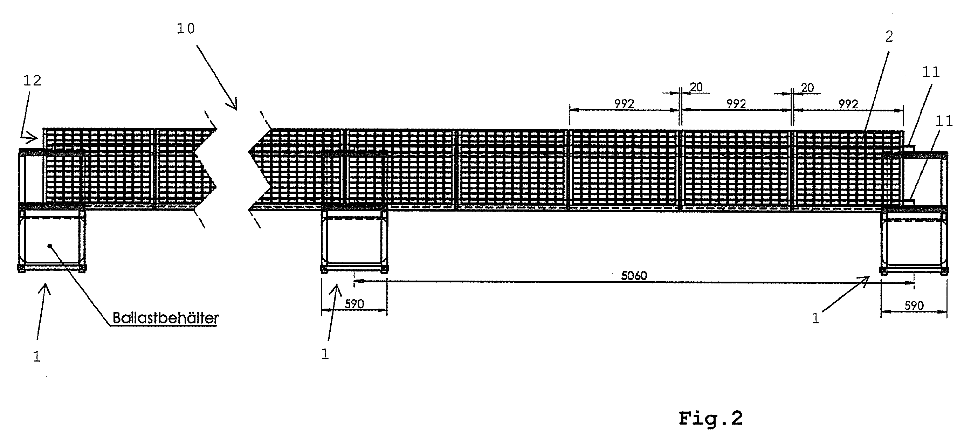

Figur 2 zeigt eine Zeile einer Freiflächenanlage 10 mit einzelnen Befestigungsvorrichtungen 1. Diese Befestigungsvorrichtungen 1 können in regelmäßigen Abständen, z. B. alle 5 Module angeordnet werden. An jedem Befestigungsmodul 1 sind kurze Montageschienen 11 angeordnet, mit denen das sich an dieser Stelle befindliche bzw. die beiden sich an dieser Stelle befindlichen Photovoltaikmodule befestigt werden. Die weiteren Photovoltaikmodule sind untereinander durch ein Gestell oder durch einzelne Schienen miteinander verbunden. Insgesamt entsteht somit eine Verbindung zwischen nebeneinander angeordneten Befestigungsvorrichtungen 1, nämlich über die entsprechenden Photovoltaikmodule 2 bzw. deren Befestigungsschienen oder deren Befestigungsgestell. Diesen Photovoltaikmodule 2 bilden eine Modulgruppe 12.

Mehrere Zeilen der in Figur 2 dargestellten Freiflächenanlage 10 sind in Figur 3 entsprechend wie in einer typischen Anordnung in einem Solarpark zu sehen.

### Bezugszeichenliste:

- 1: Befestigungsvorrichtung
- 2: Photovoltaikmodul
- 3: Behälter
- 4: Aufnahmeraum
- 5: Gestell
- 6: Kurze Stützen
- 7: Lange Stützen
- 8: Querstreben
- 9: Einfüllöffnung
- 10: Freiflächenanlage
- 11: Montageschiene
- 12: Modulgruppe

## Patentansprüche

1. Befestigungsvorrichtung (1) für Photovoltaikmodule (2) für Freiflächenanlagen (10), umfassend einen Behälter (3) mit einem Aufnahmeraum (4) für Füllmaterial, insbesondere Sand, Steine, Kies oder dergleichen zum Beschweren der Befestigungsvorrichtung (1).

2. Befestigungsvorrichtung (1) nach einem der vorgenannten Ansprüche, **dadurch gekennzeichnet, dass** der Behälter (3) eine Einfüllöffnung (4), insbesondere an der Oberseite des Behälters (3) umfasst.

3. Befestigungsvorrichtung (1) nach einem der vorgenannten Ansprüche, **dadurch gekennzeichnet, dass** die Befestigungsvorrichtung (1) und/oder der Behälter (3) stapelbar ausgebildet sind.

4. Befestigungsvorrichtung (1) nach einem der vorgenannten Ansprüche, **dadurch gekennzeichnet, dass** die Wände des Behälters (3) aus einem Gitter und/oder Gewebe, insbesondere aus einem Metall, vorzugsweise Edelstahl gefertigt sind.

5. Befestigungsvorrichtung (1) nach einem der vorgenannten Ansprüche, **dadurch gekennzeichnet, dass** ein Gestell (5) vorgesehen ist, an dem wenigstens ein Photovoltaikmodul (2) befestigbar ist und/oder das dazu ausgebildet ist, die Stabilität des Behälters (3) zu erhöhen.

6. Befestigungsvorrichtung (1) nach einem der vorgenannten Ansprüche, **dadurch gekennzeichnet, dass** die Kanten (6, 7) des Gestells (5) eine Pultform beschreiben.

7. Befestigungsvorrichtung (1) nach einem der vorgenannten Ansprüche, **dadurch gekennzeichnet, dass** der Behälter (3) in dem Gestell (5) angeordnet ist und/oder dass das Gestell den Grundrahmen für den Behälter (3) bildet.

8. Befestigungsvorrichtung (1) nach einem der vorgenannten Ansprüche, **dadurch gekennzeichnet, dass** das Gestell (5) wenigstens eine Montageschiene (11) zur Montage von Photovoltaikmodulen (2) aufweist.

9. Freiflächenanlage (10) mit einer Befestigungsvorrichtung (1) nach einem der vorgenannten Ansprüche und wenigstens einem an der Befestigungsvorrichtung (1) angebrachten Photovoltaikmodul (2).

10. Freiflächenanlage (10) nach einem der vorgenannten Ansprüche, **dadurch gekennzeichnet, dass** wenigstens zwei Befestigungsvorrichtungen (1) vorgesehen sind, die über die wenigstens eine Montageschiene (11) miteinander verbunden sind und wenigstens zwei Photovoltaikmodule (2) an der wenigstens einen Montageschiene (11) angebracht sind.

11. Freiflächenanlage (10) nach einem der vorgenannten Ansprüche, **dadurch gekennzeichnet, dass** wenigstens zwei Befestigungsvorrichtungen (1) und wenigstens zwei Photovoltaikmodule (2) vorgesehen sind, wobei die wenigstens zwei Photovoltaikmodule über wenigstens eine Montagevorrichtung miteinander zu einer Modulgruppe (12) verbunden sind, und die Modulgruppe (12) mit den Befestigungsvorrichtungen (1) verbunden ist.

12. Verfahren zur Installation von Photovoltaikmodulen (2) in einer Freiflächenanlage (10), **dadurch gekennzeichnet, dass** ein Photovoltaikmodul (2) auf der Freiflächenanlage (10) nach einem der vorgenannten Ansprüche montiert und der Behälter (3) mit dem Füllmaterial befüllt wird.
